# FASCICULE DE BREVET EUROPEEN

(11) **EP 2 822 840 B1**
(45) Date de publication et mention de la délivrance du brevet: **20.04.2016**
(21) Numéro de dépôt: 13708213.7
(22) Date de dépôt: 14.02.2013
(51) Int. Cl.: B62D 25/08

(54) **CAISSE DE VEHICULE AUTOMOBILE A ZONE D'AUVENT RIGIDIFIEE PAR CABLE.**
KRAFTFAHRZEUGKAROSSERIE MIT EINEM KABELVERSTÄRKTEN VERKLEIDUNGSBEREICH
MOTOR VEHICLE BODY WITH CABLE-STIFFENED COWL REGION

(30) Priorité: 07.03.2012 FR 1252059
(43) Date de publication de la demande: 14.01.2015
(73) Titulaire: PSA Peugeot Citroën Automobiles S.A., 78140 Velizy Villacoublay (FR)
(72) Inventeur: PERU, Marc, F-92290 Chatenay Malabry (FR)
(86) Numéro de dépôt international: PCT/FR2013/050300
(87) Numéro de publication internationale: WO 2013/132167

(56) Documents cités:
- EP-A1- 0 890 501
- WO-A1-2005/042337
- DE-A1- 4 208 408
- DE-A1- 19 644 384
- US-A1- 2005 121 874
- US-A1- 2007 215 402

## Description

L'invention a trait au domaine de l'automobile. Elle concerne plus particulièrement une caisse de véhicule automobile.

Les caisses de véhicules automobiles se doivent d'assurer une protection efficace des passagers en cas de choc, typiquement en cas de choc frontal.

Le bloc avant de la caisse, qui définit un berceau pour le groupe motopropulseur du véhicule, comprend une paire d'éléments porteurs munies de coupelles auxquelles sont fixées les têtes d'amortisseurs du train avant, ainsi qu'une traverse inférieure de baie, qui s'étend transversalement d'un côté à l'autre de la caisse et délimite inférieurement l'ouverture destinée à accueillir le pare-brise.

Le bloc avant est délimité vers l'arrière, de chaque côté, par un pied avant qui, à une extrémité supérieure, rejoint une extrémité latérale de la traverse inférieure de baie. Le pied avant se prolonge, au-delà de son extrémité supérieure, par un montant latéral de baie qui délimite latéralement l'ouverture destinée à accueillir pare-brise.

Chaque élément porteur est solidaire de la traverse inférieure de baie et du pied avant, à leur jonction, par l'intermédiaire d'une poutrelle longitudinale couramment dénommée « extension de côté d'habitacle ».

Les éléments porteurs jouent un rôle clé dans le comportement du véhicule. D'abord, lors d'un choc frontal, les éléments porteurs doivent garantir la stabilité du bloc avant pour permettre sa déformation programmée destinée à préserver au maximum l'habitacle. Ensuite, en fonctionnement normal du véhicule, les éléments porteurs doivent absorber les vibrations remontant du train avant. Par ailleurs, les éléments porteurs doivent encaisser les efforts exercés par le train avant, notamment en cas de mouvement brusque de suspension (par exemple lors d'un passage sur un relief tel qu'un trottoir ou un ralentisseur routier). En outre, les éléments porteurs doivent assurer une bonne rigidité du bloc avant en torsion, aux fins de garantir une bonne tenue de route (guidage du véhicule dans les virages), cette fonction étant cruciale pour les modèles découvrables (cabriolets, coupés-cabriolets) dont le toit n'assure pas - ou n'assure que faiblement - la reprise des efforts de torsion (fonction de triangulation) auxquels est soumise la caisse.

Il est connu de rigidifier le bloc avant, notamment au moyen d'une barre anti-rapprochement montée entre les coupelles des éléments porteurs. Mais une telle barre présente plusieurs inconvénients.

Premièrement, cette barre est relativement lourde. Etant positionnée en hauteur, elle contribue à relever le centre de gravité du véhicule, au détriment des qualités de tenue de route recherchées.

Deuxièmement, cette barre est d'une efficacité faible voire nulle en cas de chocs frontal, puisqu'elle ne garantit de rigidité que transversalement.

Troisièmement, compte tenu de son orientation transversale la barre n'assume pas de fonction de triangulation et, par conséquent n'améliore pas (ou peu) la rigidité du bloc avant en torsion.

Quatrièmement, une telle barre, relativement volumineuse, pose des difficultés d'implantation, surtout dans le cas de véhicules rabaissés (coupés, cabriolets) où le volume disponible sous le capot moteur est compté.

Le document US 2007/0215402 A1 décrit une telle caisse de véhicule et le préambule de la revendication 1.

Il est connu de tenter d'atténuer la torsion d'un véhicule au moyen d'un dispositif comprenant une paire de mâchoires montées chacune sur un longeron, et reliées au moyen d'un câble tendu transversalement entre des extrémités inférieures des mâchoires. Une telle solution est décrite dans le document US 2005/0121874.

Mais cette solution n'apporte aucun gain en matière de choc frontal et, compte tenu de son orientation transversale, n'améliore que marginalement la rigidité du bloc avant en torsion.

En outre, son implémentation relativement basse peut s'avérer problématique, compte tenu du faible espace disponible sous le moteur.

Un premier objectif est de proposer une solution permettant de rigidifier le bloc avant en cas de choc frontal.

Un deuxième objectif est de proposer une solution permettant de rigidifier le bloc avant en torsion.

Un troisième objectif est de proposer une solution ayant peu d'impact sur la masse embarquée au niveau du bloc avant.

Un quatrième objectif est de proposer une solution peut encombrante.

Il est par conséquent proposé une caisse de véhicule automobile, qui comprend, au niveau d'un bloc avant :
- une paire d'éléments porteurs destinés à accueillir des têtes d'amortisseurs d'un train roulant du véhicule ;
- une paire de pieds avant délimitant le bloc avant vers l'arrière ;
- une traverse inférieure de baie reliant des extrémités supérieures des pieds avant ;
- une paire d'extensions de côté d'habitacle, qui solidarisent chacune un élément porteur à la traverse inférieure de baie et au pied avant, à la jonction entre eux ;
- un câble sous tension ayant :
   ∘ un brin central reliant les éléments porteurs,
   ∘ deux brins intermédiaires reliant chacun une extension à un élément porteur ;
   ∘ deux brins latéraux reliant chacun une extension à une portion inférieure du pied avant.

Ce câble permet premièrement, via le brin central, de solidariser les éléments porteurs et par conséquent de coupler leur déformation en cas de choc. Il permet, deuxièmement, via les brins intermédiaires et latéraux, de coupler les éléments porteurs aux portions inférieures des pieds avant, ce qui accroît la rigidité du bloc avant, d'une part en torsion en fonctionnement normal, d'autre part en flexion en cas de choc frontal.

Diverses caractéristiques supplémentaires peuvent être prévues, seules ou en combinaison :
- chaque élément porteur est muni d'une coupelle pour la fixation d'une tête d'amortisseur, le brin central reliant les coupelles ;
- le câble est ancré, par deux extrémités opposées, aux pieds avant ;
- le câble circule au travers d'ouvertures ménagées dans les éléments porteurs et les extensions ;
- le câble est un câble d'acier ;
- le câble est toronné ;
- le câble présente un diamètre inférieur ou égal à 10 mm, de préférence inférieur ou égal à 8 mm, et par exemple de 6 mm environ.

Il est proposé, en second lieu, un véhicule automobile comprenant une caisse telle que décrite ci-dessus.

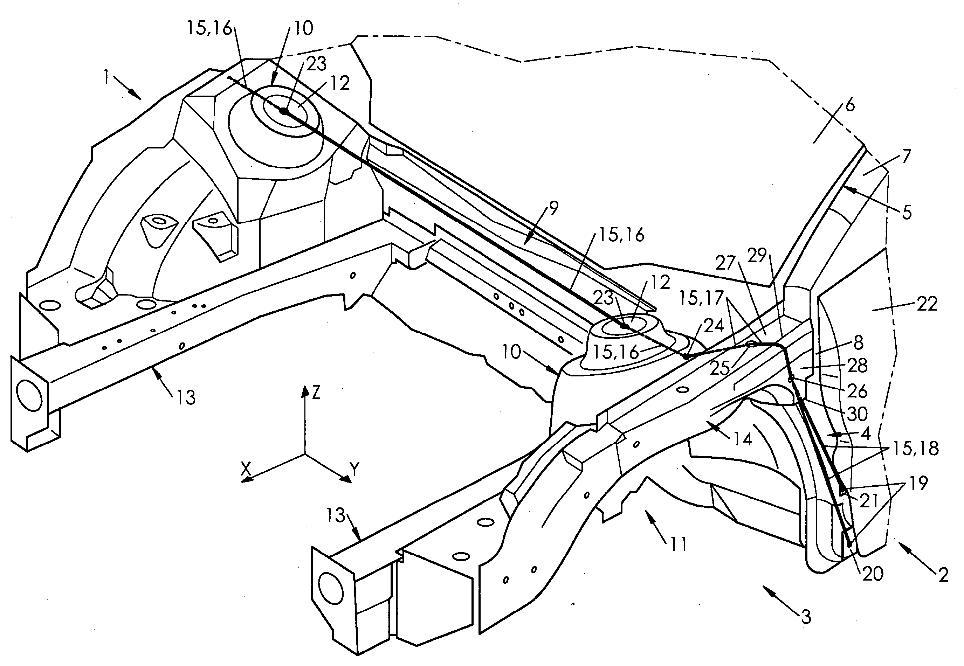

D'autres objets et avantages de l'invention apparaîtront à la lumière de la description d'un mode préféré de réalisation, faite ci-après en référence au dessin annexé qui est une vue en perspective montrant partiellement une caisse **1** d'un véhicule automobile.

On définit par rapport à la caisse **1** un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

La caisse **1** définit un habitacle **2** et un bloc **3** avant. La caisse **1** comprend une paire de pieds **4** avant qui s'étendent selon Z et délimitent à la fois :
- l'habitacle **2,** latéralement (selon Y) et vers l'avant (selon X),
- le bloc **3** avant, vers l'arrière (selon X).

La caisse **1** définit une ouverture 5 de baie destinée à accueillir un pare-brise **6. L'ouverture 5** de baie est délimitée latéralement par une paire de montants **7** latéraux de baie qui s'étendent chacun dans le prolongement d'un pied **4** avant à partir d'une extrémité **8** supérieure de celui-ci. L'ouverture **5** de baie est délimitée vers l'avant par une traverse **9** inférieure de baie qui s'étend transversalement (selon Y) et relie les extrémités **8** supérieures des pieds **4** avant.

La caisse **1** comprend par ailleurs, au niveau du bloc **3** avant, une paire d'éléments **10** porteurs destinés à accueillir des têtes d'amortisseurs d'un train roulant du véhicule. Chaque élément **10** porteur, qui assure la reprise des efforts de la suspension, se présente sous forme d'un dôme creux obtenu par emboutissage d'une tôle d'acier. Chaque élément **10** porteur s'étend au sommet d'un passage **11** de roue et est muni d'une coupelle **12** pour la fixation d'une tête d'amortisseur.

La caisse 1 comprend également une paire de longerons **13** qui s'étendent vers l'avant (selon X) à partir de la traverse **9** inférieure de baie et délimitent latéralement un berceau porteur pour un groupe motopropulseur du véhicule.

Comme on le voit sur le dessin, la caisse **1** comprend une paire d'extensions **14** de côté d'habitacle, sous forme de poutrelles à profil en U qui s'étendent longitudinalement (selon X) d'un côté latéral externe des éléments **10** porteurs. Chaque extension **14** forme un bord supérieur du passage **11** de roue et solidarise l'élément **10** porteur à la traverse **9** inférieure de baie et au pied **4** avant, à l'extrémité **8** supérieure de celui-ci (c'est-à-dire à la jonction entre la traverse **9** inférieure de baie et le pied **4** avant).

Comme cela est visible sur le dessin, la caisse **1** comporte en outre un câble **15** sous tension reliant ensemble les éléments **10** porteurs, les extensions **14** et les pieds **4** avant.

Plus précisément, ce câble **15** présente :
- un brin **16** central qui s'étend transversalement (selon Y) et relie les éléments **10** porteurs (et plus précisément, dans l'exemple illustré, les coupelles **12**),
- deux brins **17** intermédiaires qui s'étendent obliquement (c'est-à-dire qu'ils forment un angle non nul avec l'axe Y) vers l'arrière à partir des extrémités latérales du brin **16** central, et relient chacun un élément **10** porteur (et plus précisément les coupelles) à une extension ;
- deux brins **18** latéraux qui s'étendent sensiblement verticalement (selon Z) à partir des extrémités arrière des brins **17** intermédiaires et relient chacun une extension **14** à une portion inférieure du pied 4 avant.

Le câble **15** est ancré, par deux extrémités **19** opposées (correspondant aux extrémités inférieures des brins latéraux), aux pieds **4** avant. Plus précisément, selon un mode de réalisation illustré sur le dessin, le câble **15** est fixé par chaque extrémité **19** sur un renfort **20** d'appui de cric solidaire du pied **4** avant, à une extrémité inférieure de celui-ci. En variante, et comme illustré conjointement (bien que de manière non cumulative) sur le dessin, le câble **15** est fixé par son extrémité **19** sur un renfort **21** de charnière inférieure d'une portière **22** avant du véhicule. Dans les deux cas, le brin **18** latéral du câble **15** s'étend sensiblement verticalement (selon Z), même si dans le deuxième cas il peut former un angle non nul (bien qu'obtus) avec l'axe Z.

Selon un mode préféré de réalisation, le câble **15** est simplement tendu mais le brin **16** central comme les brins **17** intermédiaires ne sont pas fixés aux éléments **10** porteurs et aux extensions **14.** De fait, dans l'exemple de réalisation illustré, des trous **23, 24, 25, 26** sont ménagés, pour le passage du câble **15**, dans les éléments porteurs et dans les extensions.

Plus précisément, comme illustré, chaque élément **10** porteur est percé d'une paire de trous **23, 24,** respectivement un premier trou **23** à son sommet (en l'espèce dans chaque coupelle **12**) et un second trou **24** dans une paroi latérale en regard de l'extension **14.** Le brin **16** central passe par le premier trou **23** et circule à l'intérieur de l'élément **10** porteur (comme indiqué par le trait pointillé sur la figure) avant de ressortir par le second trou **24.**

Chaque extension **14** est également percée d'une paire de trous **25, 26,** respectivement un trou **25** supérieur dans une face **27** supérieure, et un trou **26** latéral dans une face **28** latérale. Le brin **17** intermédiaire s'étend pour partie à l'intérieur de l'extension **14,** depuis le trou **24** dans la paroi latérale de l'élément **10** porteur jusqu'au trou **25** supérieur (comme indiqué en pointillés sur le dessin), et pour partie à l'extérieur de l'extension **14,** depuis le trou **25** supérieur jusqu'à une arête **29** externe de l'extension **14,** sur laquelle le câble **15** prend appui à la jonction entre le brin **17** intermédiaire et le brin **18** latéral.

Le brin **18** latéral s'étend à partir de l'arête **29** de l'extension **14** jusqu'à son extrémité **19** (c'est-à-dire son point d'ancrage sur le pied **4** avant), pour partie à l'extérieur de l'extension **14** (entre l'arête **29** et le trou **26** latéral) et pour partie à l'intérieur de l'extension **14,** depuis le trou **26** latéral jusqu'à un bord **30** inférieur de l'extension **14** (comme indiqué en pointillés sur le dessin).

En variante, les éléments **10** porteurs et les extensions **14** ne sont pas percés de trous mais munis de passants pour le câble **15,** par exemple sous forme d'oeillets ou d'anneaux rapportés et fixés sur les éléments **10** porteurs et les extensions **14** (par exemple par rivetage). Une plaque rapportée peut également être fixée au sommet de chaque coupelle **12.**

La fixation du câble **15** au pied **4** avant à chacune de ses extrémités peut être réalisée au moyen d'un cavalier en U dont les branches sont filetées et passent au travers de trous percés dans le renfort d'appui de cric ou dans le renfort de charnière, le serrage étant réalisé au moyen d'écrous vissés sur les branches.

Le câble **15** est de préférence un câble d'acier, par exemple sous forme d'un assemblage de fils d'acier toronnés, cette forme de réalisation étant particulièrement résistante au regard de sa légèreté.

Le diamètre du câble **15** peut demeurer relativement faible, compte tenu des efforts à reprendre. Un diamètre inférieur ou égal à 10 mm est suffisant. Selon un mode de réalisation, ce diamètre peut être inférieur ou égal à 8 mm (un câble toronné en acier galvanisé d'un diamètre de 8 mm peut résister à des efforts de traction de six tonnes environ).

Dans la plupart des cas, un diamètre de câble de 6 mm environ est suffisant (un câble toronné en acier galvanisé d'un diamètre de 6 mm peut résister à des efforts de traction de 3,5 tonnes environ).

Cette architecture présente les avantages suivants.

Premièrement, le câble permet de réaliser des gains de place et de masse, grâce à son excellent rapport résistance en traction/poids.

Deuxièmement, il permet, grâce à sa circulation et notamment aux brins **18** latéraux, de limiter les mouvements de pivotement du bloc **3** avant autour de l'axe Y en cas de choc frontal, grâce au couplage des éléments **10** porteurs aux portions inférieures des pieds **4** avant via les brins intermédiaire et latéraux.

Troisièmement, il rigidifie de manière globale le bloc **3** avant, en solidarisant de manière plus intime chaque groupe élément porteur-extension-pied avant.

Quatrièmement, il assure une bonne reprise des efforts de torsion en fonctionnement normal, grâce au couplage croisé de chaque élément **10** porteur au pied **4** avant du côté opposé, via le brin **16** central.

Cinquièmement, l'implantation du câble **15** est aisée et rapide ; elle nécessite peu de modifications de l'existant (perçage de trous ou fixation de passants).

## Revendications

1. Caisse **(1)** de véhicule automobile, qui comprend, au niveau d'un bloc **(3)** avant :
- une paire d'éléments **(10)** porteurs destinés à accueillir des têtes d'amortisseurs d'un train roulant du véhicule ;
- une paire de pieds **(4)** avant délimitant le bloc **(3)** avant vers l'arrière ;
- une traverse **(9)** inférieure de baie reliant des extrémités **(8)** supérieures des pieds **(4)** avant ;
- une paire d'extensions **(14)** de côté d'habitacle, qui solidarisent chacune un élément **(10)** porteur à la traverse **(9)** inférieure de baie et au pied **(4)** avant, à la jonction entre eux ;
cette caisse **(1)** étant **caractérisée en ce qu'**elle comprend en outre un câble **(15)** sous tension ayant :
- un brin **(16)** central reliant les éléments **(10)** porteurs,
- deux brins **(17)** intermédiaires reliant chacun une extension **(14)** à un élément **(10)** porteur ;
- deux brins **(18)** latéraux reliant chacun une extension **(14)** à une portion inférieure du pied **(4)** avant.

2. Caisse **(1)** selon la revendication 1, **caractérisé en ce que** chaque élément **(10)** porteur est muni d'une coupelle **(12)** pour la fixation d'une tête d'amortisseur, et **en ce que** le brin **(16)** central relie **les coupelles (12).**

3. Caisse selon la revendication 1 ou la revendication 2, **caractérisé en ce que** le câble **(15)** est ancré, par deux extrémités opposées, aux pieds **(4)** avant.

4. Caisse **(1)** selon l'une des revendications précédentes, **caractérisé en ce que** le câble **(15)** circule au travers d'ouvertures **(23, 24, 25, 26)** ménagées dans les éléments **(10)** porteurs et les extensions **(14).**

5. Caisse **(1)** selon l'une des revendications précédentes, **caractérisé en ce que** le câble **(15)** est un câble d'acier.

6. Caisse **(1)** selon l'une des revendications précédentes, **caractérisé en ce que** le câble **(15)** est toronné.

7. Caisse **(1)** selon l'une des revendications précédentes, **caractérisé en ce que** le câble **(15)** présente un diamètre inférieur ou égal à 10 mm.

8. Caisse **(1)** selon la revendication 7, **caractérisé en ce que** le diamètre du câble **(15)** est inférieur ou égal à 8 mm.

9. Caisse **(1)** selon la revendication 8, **caractérisé en ce que** le diamètre du câble **(15)** est de 6 mm environ.

10. Véhicule automobile comprenant une caisse **(1)** selon l'une des revendications précédentes.

## Patentansprüche

1. Kraftfahrzeugkarosserie (1), die im Bereich eines Vorderblocks (3) Folgendes umfasst:
- ein Paar Tragelemente (10), das dazu bestimmt ist, die Köpfe von Stoßdämpfern eines Fahrwerks eines Fahrzeugs aufzunehmen;
- ein Paar Vorderfüße (4), das den Vorderblock (3) nach hinten abgrenzt;
- einen unteren Fensterquerträger (9), der obere Enden (8) der Vorderfüße (4) verbindet;
- ein Paar Erweiterungen (14) der Fahrgastzellenseite, das jeweils ein Tragelement (10) mit dem unteren Fensterquerträger (9) und dem Vorderfuß (4) an der Fügung zwischeneinander verbindet;
Karosserie (1) **dadurch gekennzeichnet, dass** sie außerdem ein gespanntes Kabel (15) umfasst, das Folgendes hat:
- einen zentralen Strang (16), der die Tragelemente (10) verbindet;
- zwei Zwischenstränge (17), die jeweils eine Erweiterung (14) mit einem Tragelement (10) verbinden;
- zwei Seitenstränge (18), die jeweils eine Erweiterung (14) mit einem unteren Abschnitt des Vorderfußes (4) verbinden.

2. Karosserie (1) nach Anspruch 1, **dadurch gekennzeichnet, dass** jedes Tragelement (10) mit einer Schale (12) zum Befestigen eines Stoßdämpferkopfes versehen ist, und dass der zentrale Strang (16) die Schalen (12) verbindet.

3. Karosserie nach Anspruch 1 oder Anspruch 2, **dadurch gekennzeichnet, dass** das Kabel (15) an zwei entgegengesetzten Enden an den Vorderfüßen (4) verankert ist.

4. Karosserie (1) nach einem der vorhergehenden Ansprüche, **dadurch gekennzeichnet, dass** das Kabel (15) durch Öffnungen (23, 24, 25, 26) läuft, die in den Trageelementen (10) und den Erweiterungen (14) eingerichtet sind.

5. Karosserie (1) nach einem der vorhergehenden Ansprüche, **dadurch gekennzeichnet, dass** das Kabel (15) ein Stahlkabel ist.

6. Karosserie (1) nach einem der vorhergehenden Ansprüche, **dadurch gekennzeichnet, dass** das Kabel (15) ein verseiltes Kabel ist.

7. Karosserie (1) nach einem der vorhergehenden Ansprüche, **dadurch gekennzeichnet, dass** das Kabel (15) einen Durchmesser kleiner oder gleich 10 mm aufweist.

8. Karosserie (1) nach Anspruch 7, **dadurch gekennzeichnet, dass** der Durchmesser des Kabels (15) kleiner oder gleich 8 mm ist.

9. Karosserie (1) nach Anspruch 8, **dadurch gekennzeichnet, dass** der Durchmesser des Kabels (15) etwa 6 mm beträgt.

10. Kraftfahrzeug, das eine Karosserie (1) nach einem der vorhergehenden Ansprüche umfasst.

## Claims

1. A motor vehicle body (1), which includes, in the region of a front unit (3):
- a pair of bearers (10) intended to accommodate the tops of shock absorbers of one wheelset of the vehicle;
- a pair of front legs (4) delineating the front unit (3) rearwards;
- a lower opening crossmember (9) connecting the upper ends (8) of the front legs (4);
- a pair of extensions (14) on the passenger compartment side, these each securing a bearer (10) to the lower opening crossmember (9) and to the front leg (4), where they meet one another;
this body (1) being **characterized in that** it further includes a tensioned cable (15) having:
- a central strand (16) connecting the bearers (10) ,
- two intermediate strands (17) each connecting an extension (14) to a bearer (10);
- two lateral strands (18) each connecting an extension (14) to a lower portion of the front leg (4).

2. The body (1) according to Claim 1, **characterized in that** each bearer (10) is provided with a cup (12) for the attachment of a shock absorber, and **in that** the central strand (16) connects the cups (12).

3. The body according to Claim 1 or Claim 2, **characterized in that** the cable (15) is anchored, by two opposite ends, to the front legs (4).

4. The body (1) according to one of the preceding claims, **characterized in that** the cable (15) circulates through openings (23, 24, 25, 26) arranged in the bearers (10) and the extensions (14).

5. The body (1) according to one of the preceding claims, **characterized in that** the cable (15) is a steel cable.

6. The body (1) according to one of the preceding claims, **characterized in that** the cable (15) is stranded.

7. The body (1) according to one of the preceding claims, **characterized in that** the cable (15) has a diameter less than or equal to 10 mm.

8. The body (1) according to Claim 7, **characterized in that** the diameter of the cable (15) is less than or equal to 8 mm.

9. The body (1) according to Claim 8, **characterized in that** the diameter of the cable (15) is approximately 6 mm.

10. A motor vehicle including a body (1) according to one of the preceding claims.
